# EUROPÄISCHE PATENTSCHRIFT

(11) **EP 3 033 859 B1**
(45) Veröffentlichungstag und Bekanntmachung des Hinweises auf die Patenterteilung: **12.02.2020**
(21) Anmeldenummer: 14744040.8
(22) Anmeldetag: 22.07.2014
(51) Int. Cl.: H04L 12/18, G08B 25/01, G08G 1/00

(54) **VERFAHREN, VORRICHTUNG, COMPUTERPROGRAMM, COMPUTERPROGRAMMPRODUKT ZUM ABSETZEN EINES NOTRUFS**
METHOD, DEVICE, COMPUTER PROGRAM, AND COMPUTER PROGRAM PRODUCT FOR TRANSMITTING AN EMERGENCY CALL
PROCÉDÉ, DISPOSITIF, PROGRAMME D'ORDINATEUR, PRODUIT-PROGRAMME D'ORDINATEUR POUR ENVOYER UN APPEL D'URGENCE

(30) Priorität: 14.08.2013 DE 102013216177
(43) Veröffentlichungstag der Anmeldung: 22.06.2016
(73) Patentinhaber: Bayerische Motoren Werke Aktiengesellschaft, 80809 München (DE)
(72) Erfinder: DETTLOFF, Guenter, 85386 Eching (DE); REITBERGER, Michael, 82061 Neuried (DE)
(86) Internationale Anmeldenummer: PCT/EP2014/065687
(87) Internationale Veröffentlichungsnummer: WO 2015/022153

(56) Entgegenhaltungen:
- EP-A2- 1 843 306
- DE-A1- 4 421 508
- DE-A1-102009 058 094

## Beschreibung

Die Erfindung betrifft ein Verfahren und eine Vorrichtung zum Absetzen eines Notrufs für ein Motorrad sowie ein Computerprogramm zum Absetzen des Notrufs für das Motorrad und ein Computerprogrammprodukt. Die Erfindung betrifft des Weiteren ein Verfahren und eine Vorrichtung zum Empfangen des Notrufs für das Motorrad sowie ein Computerprogramm und ein Computerprogrammprodukt zum Empfangen des Notrufs für das Motorrad.

Ein Absetzen eines Notrufs erfordert häufig eine Sprachverbindung. Bei einem Motorrad kann bei einer Sprachverbindung ein Fahrer des Motorrads allerdings gegebenenfalls durch Nebengeräusche sehr schlecht verständlich sein.

DE 4421508 A1 offenbart ein System zum Herbeiholen von Hilfe für Personen oder Insassen von Fahrzeugen, insbesondere ein Unfall-Rettungssystem, mit einem Mobiltelefon und einer Betätigungseinrichtung bei deren Betätigung das Mobiltelefon eine Notfallnachricht aussendet, die von einer Mobilfunkbetriebseinrichtung empfangen wird, wobei das System eine Lokalisierungseinrichtung aufweist, die den Ort des Mobiltelefons feststellt und Daten abgibt, die den Ort des Mobiltelefons kennzeichnen und die der Notfallnachricht zugeordnet werden.

Eine Aufgabe, die der Erfindung zugrunde liegt, ist es, ein Verfahren und eine korrespondierende Vorrichtung zum Absetzen eines Notrufs für ein Motorrad zu schaffen, das beziehungsweise die dazu beiträgt, dass zuverlässig und einfach ein Notruf abgesetzt wird.

Die Aufgabe wird gelöst durch den unabhängigen Patentanspruch 1. Vorteilhafte Ausgestaltungen der Erfindung sind in den Unteransprüchen gekennzeichnet.

Gemäß einem ersten Aspekt zeichnet sich die Erfindung aus durch ein Verfahren und eine korrespondierende Vorrichtung zum Absetzen eines Notrufs für ein Motorrad. Bezogen auf einen Notfall wird eine Notruftextnachricht gesendet. Als akustische Rückmeldung zum Senden der Notruftextnachricht wird ein anhaltendes akustisches Signal erzeugt. In Antwort auf ein Empfangen einer Notrufbestätigungsnachricht mittels einer Kommunikationsschnittstelle des Motorrads wird das anhaltende akustische Signal abhängig von der empfangenen Notrufbestätigungsnachricht beendet. Abhängig von der Notrufbestätigungsnachricht wird ein weiteres akustisches Signal erzeugt, als akustische Bestätigung.

Das weitere akustische Signal unterscheidet sich insbesondere von dem anhaltenden akustischen Signal. Das weitere akustische Signal umfasst beispielsweise zweimal einen langen Ton. Durch das weitere akustische Signal kann beispielsweise der Fahrer des Motorrads und/oder Passanten erkennen, dass der Notruf erfolgreich abgesetzt wurde.

Durch das Senden der Notruftextnachricht kann ein Notruf frei von einer Sprachverbindung abgesetzt werden. Durch das anhaltende akustische Signal, wie beispielsweise ein sirenenartiges Signal, kann beispielsweise ein Fahrer des Motorrads und/oder Passanten zuverlässig erkennen, dass ein Notruf mittels der Notruftextnachricht abgesetzt wurde. Somit kann zuverlässig und einfach ein Notruf abgesetzt werden.

Gemäß einer vorteilhaften Ausgestaltung wird der Notfall automatisch detektiert und die Notruftextnachricht wird automatisch gesendet.

Durch das automatische Detektieren des Notfalls und das automatische Senden der Notruftextnachricht ist es nicht erforderlich, dass beispielsweise der Fahrer des Motorrads die Notruftextnachricht manuell absetzt beziehungsweise den Notruf manuell betätigt. Somit kann sichergestellt werden, dass auch bei Unfällen, bei denen beispielsweise niemand manuell einen Notruf absetzen kann, ein Notruf für das Motorrad abgesetzt wird.

Gemäß einer weiteren vorteilhaften Ausgestaltung wird bei einer manuellen Bestätigung des Notfalls eine weitere Notruftextnachricht als ein Bestätigungsindikator seitens des Motorrads gesendet.

Hierdurch kann auf einfacher Weise und ohne Sprachverbindung bestätigt werden, dass es sich um einen Notfall handelt.

Gemäß einer weiteren vorteilhaften Ausgestaltung wird zum Senden der Notruftextnachricht das Next Generation Telematics Pattern, abgekürzt NGTP, verwendet.

NGTP ist ein Protokoll zur Übertragung von Telematik-Diensten, wie zum Beispiel zur Übertragung eines Notrufs. Hierdurch ist eine standardisierte Kommunikation, beispielsweise mit einer Autorisierung, möglich. Alternativ kann beispielsweise eine Übertragung mittels Short Message Service (SMS) erfolgen.

Gemäß einem weiteren Aspekt zeichnet sich die Erfindung aus durch ein Computerprogramm zum Absetzen eines Notrufs für ein Motorrad, wobei das Computerprogramm ausgebildet ist, das Verfahren zum Absetzen des Notrufs für das Motorrad oder eine vorteilhafte Ausgestaltung des Verfahrens auf einer Datenverarbeitungsvorrichtung durchzuführen.

Gemäß einem weiteren Aspekt zeichnet sich die Erfindung aus durch ein Computerprogrammprodukt, das ausführbaren Programmcode umfasst, wobei der Programmcode bei Ausführung durch eine Datenverarbeitungsvorrichtung das Verfahren zum Absetzen eines Notrufs für ein Motorrad oder eine vorteilhafte Ausgestaltung des Verfahrens ausführt.

Das Computerprogrammprodukt umfasst insbesondere ein von der Datenverarbeitungsvorrichtung lesbares Medium, auf dem der Programmcode gespeichert ist.

Ausführungsbeispiele der Erfindung sind im Folgenden anhand der schematischen Zeichnungen näher erläutert.

Es zeigen:
- Figur 1: ein Motorrad mit einer Steuervorrichtung des Motorrads sowie eine externe Steuervorrichtung extern des Motorrads,
- Figur 2: ein Ablaufdiagramm zum Absetzen eines Notrufs für das Motorrad und
- Figur 3: ein Ablaufdiagramm zum Empfangen des Notrufs für das Motorrad.

Elemente gleicher Konstruktion oder Funktion sind figurenübergreifend mit den gleichen Bezugszeichen gekennzeichnet.

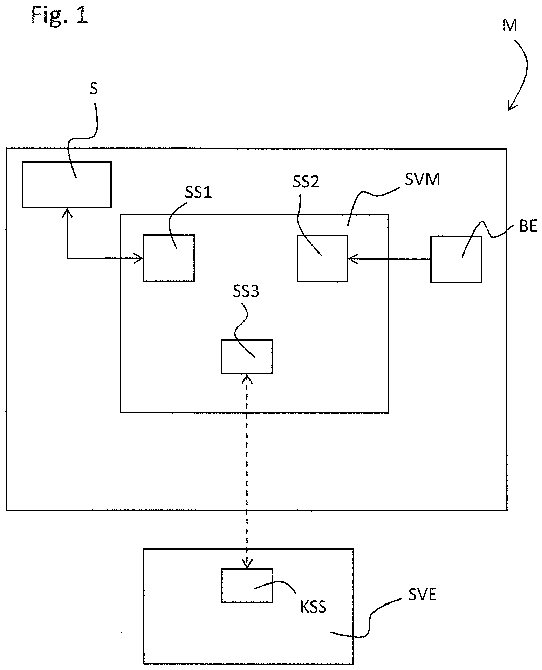

Figur 1 zeigt ein Motorrad M. Das Motorrad M weist beispielsweise einen Sensor S auf. Der Sensor S ist dazu ausgebildet einen Notfall automatisch zu detektieren.

Das Motorrad M weist beispielsweise alternativ oder zusätzlich ein Bedienelement BE auf, wie beispielsweise einen Schalter, zum manuellen Initiieren und/oder Bestätigen eines Notrufs.

Das Motorrad M weist eine Steuervorrichtung SVM des Motorrads M auf. Die Steuervorrichtung SVM des Motorrads M weist einen Daten- und Programmspeicher auf, eine Recheneinheit sowie beispielsweise mehrere Schnittstellen, wie beispielsweise eine erste Schnittstelle SS1, eine zweite Schnittstelle SS2, eine dritte Schnittstelle SS3 des Motorrads M. Der Daten- und Programmspeicher und die eine Recheneinheit der Steuervorrichtung SVM des Motorrads M können in einer Einheit und/oder verteilt auf mehrere Einheiten ausgebildet sein.

Die erste Schnittstelle SS1 des Motorrads M ist beispielsweise dazu ausgebildet, mit dem Sensor S zu kommunizieren, insbesondere um ein Messsignal des Sensors S zu empfangen. Die zweite Schnittstelle SS2 des Motorrads M ist beispielsweise dazu ausgebildet, ein Betätigen des Bedienelements BE zu erkennen. Die dritte Schnittstelle SS3 des Motorrads M, die auch als Kommunikationsschnittstelle des Motorrads M bezeichnet werden kann, ist beispielsweise dazu ausgebildet, mit einer externen Kommunikationsschnittstelle KSS zu kommunizieren, die extern des Motorrads ausgebildet ist.

Die externe Kommunikationsschnittstelle KSS ist beispielsweise einer externen Steuervorrichtung SVE zugeordnet. Die externe Steuervorrichtung SVE umfasst einen Daten- und Programmspeicher sowie eine Recheneinheit der externen Steuervorrichtung SVE. Der Daten- und Programmspeicher und die Recheneinheit der externen Steuervorrichtung SVE können in einer Einheit und/oder verteilt auf mehrere Einheiten ausgebildet sein. Die externe Steuervorrichtung SVE ist beispielsweise in einem Backend und/oder in einem Server eines Rettungsdienstes ausgebildet.

Das Backend, in dem die externe Steuervorrichtung SV beispielsweise ausgebildet ist, ist beispielsweise eine Notrufzentrale. Die Notrufzentrale ist beispielsweise eine einheitliche Notrufzentrale, die den Notruf entgegennimmt und gegebenenfalls an eine örtliche Rettungsleitstelle weiterleitet.

Die dritte Schnittstelle SS3 des Motorrads ist beispielsweise dazu ausgebildet, eine Notruftextnachricht NTN1 und/oder eine weitere Notruftextnachricht NTN2 zu senden zum Empfangen durch die externe Kommunikationsschnittstelle KSS der externen Steuervorrichtung SVE. Die Notruftextnachricht NTN1 und die weitere Notruftextnachricht NTN2 werden später näher erläutert.

Die externe Kommunikationsschnittstelle KSS der externen Steuervorrichtung SVE ist beispielsweise dazu ausgebildet, eine Notrufbestätigungsnachricht NBN und/oder eine Anforderung RQ der weiteren Notruftextnachricht NTN2 zu senden, zum Empfangen durch die dritte Schnittstelle SS3 des Motorrads M.

Die Steuervorrichtung SVM des Motorrads M kann auch als Vorrichtung zum Absetzen eines Notrufs eines Motorrads M bezeichnet werden.

Die externe Steuervorrichtung SVE kann auch als Vorrichtung zum Empfangen eines Notrufs für ein Motorrad M bezeichnet werden.

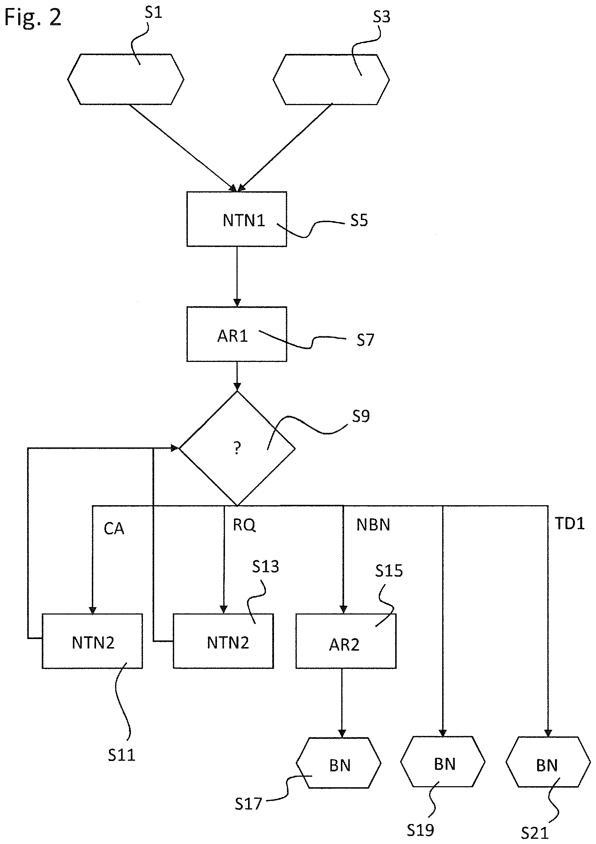

Zum Absetzen des Notrufs wird ein Programm, das beispielsweise in dem Daten- und Programmspeicher der Steuervorrichtung SVM des Motorrads M gespeichert ist, von der Recheneinheit der Steuervorrichtung SVM des Motorrads M abgearbeitet (siehe Figur 2).

Das Programm wird beispielsweise in Antwort auf ein automatisches Detektieren des Notfalls in einem Schritt S1 gestartet, in dem beispielsweise Variablen initialisiert werden können. Das automatische Detektieren kann beispielsweise mittels des Sensors S erfolgen. Anschließend wird das Programm in einem Schritt S5 fortgesetzt.

Alternativ oder zusätzlich kann das Programm in Antwort auf eine manuelle Initiierung des Notrufs in einem Schritt S3 gestartet werden, in dem beispielsweise Variablen initialisiert werden können. Die manuelle Initiierung erfolgt beispielsweise durch Betätigung des Bedienelements BE. Anschließend wird das Programm in dem Schritt S5 fortgesetzt.

In dem Schritt S5 wird die Notruftextnachricht NTN1 bezogen auf den Notfall gesendet. Die Notruftextnachricht NTN1 wird beispielsweise mittels der dritten Schnittstelle SS3 des Motorrads M gesendet zum Empfangen durch die externe Kommunikationsschnittstelle KSS der externen Steuervorrichtung SVE. Die Notruftextnachricht NTN1 umfasst beispielsweise eine Fahrzeugidentifikationsnummer des Motorrads M und/oder eine Position des Motorrads M, wie beispielsweise eine GPS-Position. Alternativ oder zusätzlich umfasst die Notruftextnachricht NTN1 beispielsweise eine Information, ob es eine automatisch gesendete Notruftextnachricht NTN1 oder eine manuell initiierte Notruftextnachricht NTN1 ist. Alternativ oder zusätzlich umfasst die Notruftextnachricht NTN1 beispielsweise eine Information zu einem Unfall, wie beispielsweise ob es ein Front-, ein Heckunfall, ein so genannter Highsider oder ein so genannter Lowsider war. Alternativ oder zusätzlich umfasst die Notruftextnachricht NTN1 beispielsweise letzte Wegpunkte zur Richtungsbestimmung des Motorrads M. Alternativ oder zusätzlich umfasst die Notruftextnachricht NTN1 beispielsweise eine aktuelle Mobilfunktelefonnummer eines Mobilfunktelefons eines Fahrers des Motorrads M. Alternativ oder zusätzlich umfasst die Notruftextnachricht NTN1 beispielsweise zusätzlich eine Information zu dem Fahrer, wie beispielsweise ob der Fahrer eine chronische Erkrankung aufweist.

Die Notruftextnachricht NTN1 wird beispielsweise mittels des Next Generation Telematics Patterns gesendet. Alternativ oder zusätzlich kann die Notruftextnachricht NTN1 beispielsweise mittels eines so genannten dual-tone multi-frequency-Signals, abgekürzt DTMF-Signal, gesendet werden.

In einem Schritt S7 wird ein anhaltendes akustisches Signal AR1 erzeugt als akustische Rückmeldung zum Senden der Notruftextnachricht NTN1. Das anhaltende akustische Signal AR1 ist beispielsweise ein sirenenartiges Signal.

In einem Schritt S9 wird überprüft, ob ein vorgegebenes Ereignis eintritt. Das vorgegebene Ereignis ist beispielsweise eine manuelle Bestätigung CA des Notfalls beispielsweise durch Betätigung des Bedienelements BE. Tritt dieses Ereignis ein, so wird das Programm in einem Schritt S11 fortgeführt.

Das vorgegebene Ereignis ist beispielsweise alternativ oder zusätzlich ein Empfangen der Anforderung RQ der weiteren Notruftextnachricht NTN2, beispielsweise mittels der dritten Schnittstelle SS3 des Motorrads M. Tritt dieses Ereignis ein, so wird das Programm in einem Schritt S13 fortgesetzt.

Das vorgegebene Ereignis ist beispielsweise alternativ oder zusätzlich das Empfangen der Notrufbestätigungsnachricht NBN, beispielsweise mittels der dritten Schnittstelle SS3 des Motorrads. Tritt dieses Ereignis ein, so wird das Programm in einem Schritt S15 fortgeführt.

Das vorgegebene Ereignis ist beispielsweise alternativ oder zusätzlich ein manuelles Deaktivieren des Notrufs, beispielsweise mittels eines Schlüsselschalters des Motorrads M. Tritt dieses Ereignis ein, so wird das Programm in einem Schritt S19 fortgesetzt.

Das vorgegebene Ereignis ist beispielsweise alternativ oder zusätzlich ein Ablauf einer vorgegebenen ersten Zeitdauer TD1. Die vorgegebene erste Zeitdauer TD1 ist beispielsweise 30 Minuten. Tritt dieses Ereignis ein, so wird das Programm in einem Schritt S21 fortgesetzt.

In dem Schritt S11 wird die weitere Notruftextnachricht NTN2 gesendet, als ein Bestätigungsindikator des Motorrads M, zum Empfangen durch die externe Kommunikationsschnittstelle KSS der externen Steuervorrichtung SVE, beispielsweise mittels der dritten Schnittstelle SS3 des Motorrads M. Die weitere Notruftextnachricht NTN2 umfasst beispielsweise die gleichen, beziehungsweise aktualisierte Informationen der Notruftextnachricht NTN1. Anschließend wird das Programm in dem Schritt S9 fortgesetzt.

In dem Schritt S13 wird die weitere Notruftextnachricht NTN2 gesendet, als ein Bestätigungsindikator des Motorrads M, zum Empfangen durch die externe Kommunikationsschnittstelle KSS der externen Steuervorrichtung SVE, beispielsweise mittels der dritten Schnittstelle SS3 des Motorrads M. Anschließend wird das Programm in dem Schritt S9 fortgesetzt.

In dem Schritt S15 wird das anhaltende akustische Signal AR1 abhängig von der empfangenen Notrufbestätigungsnachricht NBN beendet. Anschließend wird ein weiteres akustisches Signal AR2 erzeugt. Das weitere akustische Signal AR2 umfasst beispielsweise zweimal hintereinander einen langen Ton. Danach wird das Programm in einem Schritt S17 fortgesetzt.

In dem Schritt S17 wird beispielsweise eine Beendigungsnachricht BE gesendet, beispielsweise mittels der dritten Schnittstelle SS3 des Motorrads zum Empfangen durch die externe Kommunikationsschnittstelle KSS der externen Steuervorrichtung SVE. Die Beendigungsnachricht BE umfasst hierbei beispielsweise eine Information darüber, dass die Notrufbestätigungsnachricht NBN erfolgreich empfangen worden ist. Anschließend wird das Programm beendet.

In dem Schritt S19 wird die Beendigungsnachricht BN gesendet beispielsweise mittels der dritten Schnittstelle SS3 des Motorrads zum Empfangen durch die externe Kommunikationsschnittstelle KSS der externen Steuervorrichtung SVE, hierbei beispielsweise aufweisend eine Information darüber, dass der Notruf manuell abgebrochen wurde. Anschließend wird das Programm beendet.

In einem Schritt S21 wird die Beendigungsnachricht BN gesendet beispielsweise mittels der dritten Kommunikationsschnittstelle KSS3 zum Empfangen durch die externe Kommunikationsschnittstelle KSS der externen Steuervorrichtung SVE, wobei die Beendigungsnachricht BN hierbei beispielsweise eine Information darüber umfasst, dass die vorgegebene erste Zeitdauer TD1 abgelaufen ist. Anschließend wird das Programm beendet.

Nach Beenden des Programms kann das Programm gegebenenfalls in dem Schritt S1 und/oder in dem Schritt S3 wieder gestartet werden.

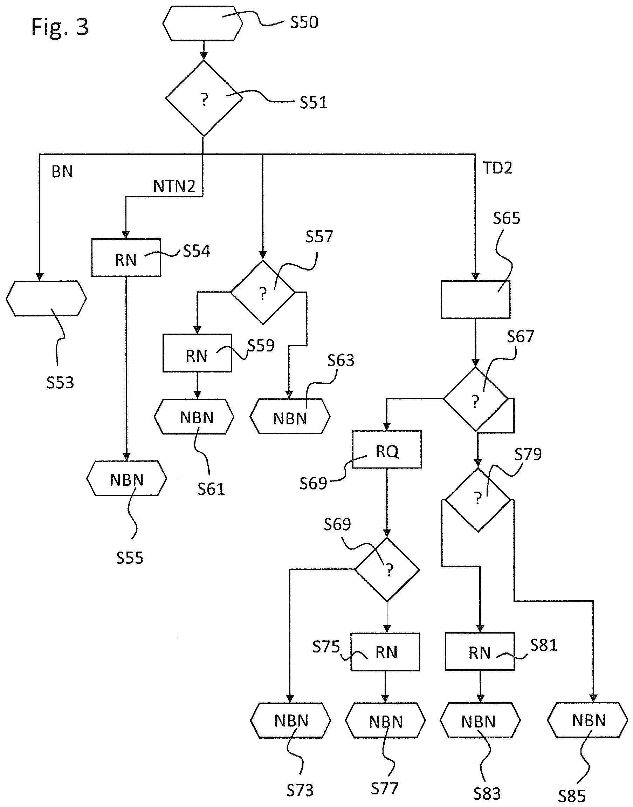

Figur 3 zeigt ein Ablaufdiagramm eines Programms zum Empfangen der Notruftextnachricht NTN1. Das Programm ist beispielsweise in dem Daten- und Programmspeicher der externen Steuervorrichtung SVE gespeichert und kann von der Recheneinheit der externen Steuervorrichtung SVE abgearbeitet werden.

Das Programm wird in einem Schritt S50 in Antwort auf ein Empfangen der Notruftextnachricht NTN1 beispielsweise mittels der externen Kommunikationsschnittstelle KSS der externen Steuervorrichtung SVE gestartet. In dem Schritt S50 werden beispielsweise Variablen initialisiert.

In einem darauffolgenden Schritt S51 wird überprüft, ob ein vorgegebenes Ereignis eintritt. Das vorgegebene Ereignis ist beispielsweise das Empfangen der Beendigungsnachricht BN. Tritt dieses Ereignis ein, so wird das Programm in einem Schritt S53 fortgesetzt.

Das vorgegebene Ereignis ist beispielsweise alternativ oder zusätzlich das Empfangen der weiteren Notruftextnachricht NTN2. Tritt dieses Ereignis ein, so wird das Programm in einem Schritt S54 fortgesetzt.

Das vorgegebene Ereignis ist beispielsweise alternativ oder zusätzlich ein Eingang eines Telefonanrufs des Fahrers des Motorrads M. Tritt dieses Ereignis ein, so wird das Programm in einem Schritt S57 fortgesetzt.

Das vorgegebene Ereignis ist beispielsweise alternativ oder zusätzlich ein Ablauf einer vorgegebenen zweiten Zeitdauer TD2. Die vorgegebene zweite Zeitdauer TD2 ist beispielsweise zwei Minuten. Tritt dieses Ereignis ein, so wird das Programm in einem Schritt S65 fortgesetzt.

In dem Schritt S53 wird das Programm beendet.

In dem Schritt S54 wird eine Rettungsdienstnachricht RN an den Rettungsdienst gesendet. Die Rettungsdienstnachricht RN umfasst hierbei beispielsweise Teile der, oder die gesamte Information der weiteren Notruftextnachricht NTN2 und/oder der Notruftextnachricht NTN1. Anschließend wird das Programm in einem Schritt S55 fortgesetzt.

In dem Schritt S55 wird die Notrufbestätigungsnachricht NBN gesendet beispielsweise mittels der externen Kommunikationsschnittstelle KSS zum Empfangen durch die dritte Kommunikationsschnittstelle SS3 des Motorrads M. Die Notrufbestätigungsnachricht NBN umfasst hierbei beispielsweise eine Information darüber, dass der Notruf erfolgreich abgesetzt wurde.

In dem Schritt S57 wird überprüft, ob der Notruf abgesetzt werden soll. Soll der Notruf abgesetzt werden, so wird das Programm in einem Schritt S59 fortgesetzt. Soll der Notruf nicht abgesetzt werden, so wird das Programm in einem Schritt S63 fortgesetzt. Die Überprüfung erfolgt beispielsweise abhängig von einem Ergebnis des Telefonanrufs des Fahrers des Motorrads.

In dem Schritt S59 wird die Rettungsdienstnachricht RN an den Rettungsdienst gesendet. Die Rettungsdienstnachricht RN umfasst hierbei beispielsweise Teile der, oder die gesamte Information der Notruftextnachricht NTN1. Anschließend wird das Programm in einem Schritt S61 fortgesetzt.

In dem Schritt S61 wird die Notrufbestätigungsnachricht NBN gesendet, beispielsweise mittels der externen Kommunikationsschnittstelle KSS zum Empfangen durch die dritte Schnittstelle SS3 des Motorrads M. Die Notrufbestätigungsnachricht NBN umfasst hierbei beispielsweise eine Information darüber, dass der Notruf erfolgreich abgesetzt wurde.

In dem Schritt S63 wird die Notrufbestätigungsnachricht NBN gesendet, beispielsweise mittels der externen Kommunikationsschnittstelle KSS zum Empfangen durch die dritte Kommunikationsschnittstelle SS3 des Motorrads. Die Notrufbestätigungsnachricht NBN umfasst hierbei beispielsweise eine Information darüber, dass der Notruf abgebrochen wurde.

In dem Schritt S65 wird ein Telefonanruf an den Fahrer des Motorrads M initiiert. Hierfür wird beispielsweise die Mobilfunktelefonnummer angerufen, die in der Notruftextnachricht NTN1 hinterlegt ist und/oder die der Fahrzeugidentifikationsnummer zugeordnet ist und beispielsweise in der Steuervorrichtung SVE hinterlegt ist. Anschließend wird das Programm in einem Schritt S67 fortgesetzt.

In dem Schritt S67 wird überprüft, ob der Fahrer telefonisch erreicht worden ist. Wurde der Fahrer telefonisch erreicht, so wird das Programm in einem Schritt S79 fortgesetzt. Wurde der Fahrer telefonisch nicht erreicht, so wird das Programm in einem Schritt S69 fortgesetzt.

In dem Schritt S69 wird die Anforderung RQ der weiteren Notruftextnachricht NTN2 gesendet, beispielsweise mittels der externen Kommunikationsschnittstelle KSS zum Empfangen durch die dritte Kommunikationsschnittstelle SS3 des Motorrads M. Daraufhin wird das Programm in einem Schritt S71 fortgesetzt.

In dem Schritt S71 wird in Antwort auf ein Empfangen der weiteren Notruftextnachricht NTN2 überprüft, ob der Notruf an den Rettungsdienst abgesetzt werden soll. Hierzu wird beispielsweise der Inhalt der weiteren Notruftextnachricht NTN2 überprüft. Enthält diese beispielsweise eine Information darüber, dass das Motorrad M fährt, so kann davon ausgegangen werden, dass der Notruf nicht abgesetzt werden muss. Soll der Notruf nicht abgesetzt werden, so wird das Programm in einem Schritt S73 fortgesetzt. Soll der Notruf abgesetzt werden, so wird das Programm in einem Schritt S75 fortgesetzt.

In dem Schritt S73 wird die Notrufbestätigungsnachricht NBN gesendet, beispielsweise mittels der externen Kommunikationsschnittstelle KSS zum Empfangen durch die dritte Kommunikationsschnittstelle SS3 des Motorrads M. Die Notrufbestätigungsnachricht NBN umfasst hierbei beispielsweise eine Information darüber, dass der Notruf abgebrochen wurde.

In dem Schritt S75 wird die Rettungsdienstnachricht RN gesendet an den Rettungsdienst. Die Rettungsdienstnachricht RN umfasst hierbei beispielsweise Teile der, oder die gesamte Information der Notruftextnachricht NTN1 und/oder der weiteren Notruftextnachricht NTN2. Anschließend wird das Programm in einem Schritt S77 fortgesetzt.

In dem Schritt S77 wird die Notrufbestätigungsnachricht NBN gesendet, beispielsweise mittels der externen Kommunikationsschnittstelle KSS der externen Steuervorrichtung SV3 zum Empfangen durch die dritte Kommunikationsschnittstelle SS3 des Motorrads M. Die Notrufbestätigungsnachricht NBN umfasst hierbei beispielsweise eine Information darüber, dass der Notruf erfolgreich abgesetzt wurde. Anschließend wird das Programm beendet.

In dem Schritt S79 wird ermittelt, ob der Notruf abgesetzt werden soll, oder ob der Notruf nicht abgesetzt werden soll. Dies geschieht beispielsweise anhand des Ergebnisses des Telefonanrufs. Soll der Notruf abgesetzt werden, so wird das Programm in einem Schritt S81 fortgesetzt, soll der Notruf nicht abgesetzt werden, so wird das Programm in einem Schritt S85 fortgesetzt.

In dem Schritt S81 wird die Rettungsdienstnachricht RN gesendet an den Rettungsdienst. Anschließend wird das Programm in einem Schritt S83 fortgeführt.

In dem Schritt S83 wird die Notrufbestätigungsnachricht NBN gesendet, beispielsweise mittels der externen Kommunikationsschnittstelle KSS zum Empfangen durch die dritte Kommunikationsschnittstelle SS3 des Motorrads. Die Notrufbestätigungsnachricht NBN umfasst hierbei beispielsweise eine Information darüber, dass der Notruf erfolgreich abgesetzt wurde. Anschließend wird das Programm beendet.

In dem Schritt S85 wird die Notrufbestätigungsnachricht NBN gesendet, beispielsweise mittels der externen Kommunikationsschnittstelle KSS der externen Steuervorrichtung SVE zum Empfangen durch die dritte Kommunikationsschnittstelle SS3 des Motorrads M. Die Notrufbestätigungsnachricht NBN umfasst hierbei beispielsweise eine Information darüber, dass der Notruf abgebrochen wurde. Anschließend wird das Programm beendet.

Nach Beenden des Programms kann das Programm gegebenenfalls in dem Schritt S50 wieder gestartet werden.

Der Notruf kann beispielsweise alternativ oder zusätzlich abgebrochen werden durch einen manuellen Anruf des Fahrers des Motorrads M. Die Zuordnung beziehungsweise die Identifikation des Fahrers kann beispielsweise mit der vom Fahrer angegebenen Position mit einem Abgleich der GPS-Position erfolgen. Alternativ oder zusätzlich kann die Identifikation durch die Fahrzeugidentifikationsnummer erfolgen.

Hierdurch kann ein Beitrag dazu geleistet werden, dass einfach und gegebenenfalls ohne Sprachverbindung ein Notruf für ein Motorrad abgesetzt und empfangen werden kann.

### Bezugszeichenliste

- AR1: anhaltendes akustisches Signal
- AR2: weiteres akustisches Signal
- BE: Bedienelement
- CA: Bestätigung des Notfalls
- KSS: externe Schnittstelle
- BN: Beendigungsnachrichtung
- NTN1: Notruftextnachricht
- NTN2: weitere Notruftextnachricht
- RN: Rettungsdienstnachricht
- NBN: Notrufbestätigungsnachricht
- RQ: Anforderung (einer weiteren Notruftextnachricht)
- BN: Beendigungsnachricht
- TD1: erste vorgegebene Zeitdauer
- TD2: zweite vorgegebene Zeitdauer
- S: Sensor
- M: Motorrad
- SVM: Steuervorrichtung (des Motorrads)
- SS1 bis SS3: erste bis dritte Schnittstelle
- SVE: externe Steuervorrichtung

## Patentansprüche

1. Verfahren zum Absetzen eines Notrufs für ein Motorrad (M), bei dem
- eine Notruftextnachricht (NTN1) bezogen auf einen Notfall gesendet wird, wobei
- ein anhaltendes akustisches Signal (AR1) erzeugt wird als akustische Rückmeldung zum Senden der Notruftextnachricht (NTN1),
- in Antwort auf ein Empfangen einer Notrufbestätigungsnachricht (NBN) mittels einer Kommunikationsschnittstelle des Motorrads das anhaltende akustische Signal (AR1) abhängig von der empfangenen Notrufbestätigungsnachricht (NBN) beendet wird,
- bei dem abhängig von der Notrufbestätigungsnachricht (NBN) ein weiteres akustisches Signal (AR2) erzeugt wird, als akustische Bestätigung.

2. Verfahren nach Anspruch 1, bei dem der Notfall automatisch detektiert wird und die Notruftextnachricht (NTN1) automatisch gesendet wird.

3. Verfahren nach einem der vorhergehenden Ansprüche,
bei dem bei einer manuellen Bestätigung (CA) des Notfalls eine weitere Notruftextnachricht (NTN2) als ein Bestätigungsindikator des Motorrads (M) gesendet wird.

4. Verfahren nach einem der vorhergehenden Ansprüche,
bei dem zum Senden der Notruftextnachricht (NTN1) das Next Generation Telematics Pattern, NGTP, verwendet wird.

5. Vorrichtung zum Absetzen eines Notrufs für ein Motorrad (M), wobei die Vorrichtung dazu ausgebildet ist, ein Verfahren nach einem der Ansprüche 1 bis 4 durchzuführen.

6. Computerprogramm zum Absetzen eines Notrufs für ein Motorrad (M), wobei das Computerprogramm ausgebildet ist, ein Verfahren nach einem der Ansprüche 1 bis 4 bei seiner Ausführung auf einer Datenverarbeitungsvorrichtung durchzuführen.

7. Computerprogrammprodukt umfassend ausführbaren Programmcode, wobei der Programmcode bei Ausführung durch eine Datenverarbeitungsvorrichtung das Verfahren nach einem der Ansprüche 1 bis 4 ausführt.

## Claims

1. A method for transmitting an emergency call for a motorcycle (M), in which
- an emergency-call text message (NTN1) relating to an emergency is sent, wherein
- a continuous acoustic signal (AR1) is generated as an acoustic response to the sending of the emergency-call text message (NTN1),
- in response to receiving an emergency-call confirmation message (NBN) by means of a communication interface of the motorcycle the continuous acoustic signal (AR1) is terminated dependent on the emergency-call confirmation message (NBN) received,
- in which dependent on the emergency-call confirmation message (NBN) a further acoustic signal (AR2) is generated, as acoustic confirmation.

2. A method according to Claim 1, in which the emergency is automatically detected and the emergency-call text message (NTN1) is automatically sent.

3. A method according to one of the preceding claims,
in which in the event of a manual confirmation (CA) of the emergency a further emergency-call text message (NTN2) is sent as a confirmation indicator of the motorcycle (M).

4. A method according to one of the preceding claims,
in which the Next Generation Telematics Pattern, NGTP, is used to send the emergency-call text message (NTN1).

5. A device for transmitting an emergency call for a motorcycle (M), wherein the device is designed to carry out a method according to one of Claims 1 to 4.

6. A computer program for transmitting an emergency call for a motorcycle (M), wherein the computer program is designed to carry out a method according to one of Claims 1 to 4 when executed on a data-processing device.

7. A computer program product comprising executable program code, wherein the program code when executed by a data-processing device carries out the method according to one of Claims 1 to 4.

## Revendications

1. Procédé permettant d'envoyer un appel d'urgence pour un motocycle (M) selon lequel un SMS d'appel d'urgence (NTN1) relatif à un cas d'urgence est envoyé, selon lequel :
- un signal acoustique persistant (AR1) est produit en tant que réaction acoustique à l'émission du SMS d'appel d'urgence (NTN1),
- en réponse à une réception d'un message de confirmation de l'appel d'urgence (NBN), au moyen d'une interface de communication du motocycle, le signal acoustique persistant (AR1) est arrêté en fonction du message de confirmation de l'appel d'urgence (NBN) reçu, et
- en fonction du message de confirmation de l'appel d'urgence (NBN) un autre signal acoustique (AR2) est produit en tant que confirmation acoustique.

2. Procédé conforme à la revendication 1,
selon lequel le cas d'urgence est détecté automatiquement et le SMS d'appel d'urgence (NTN1) est transmis automatiquement.

3. Procédé conforme à l'une des revendications précédentes,
selon lequel lors d'une confirmation manuelle (CA) du cas d'urgence un autre SMS d'appel d'urgence (NTN2) est transmis en tant qu'indicateur de confirmation du motocycle (M).

4. Procédé conforme à l'une des revendications précédentes,
selon lequel pour transmettre le SMS d'appel d'urgence (NTN1) on utilise le modèle télématique de nouvelle génération MGTP.

5. Dispositif permettant d'envoyer un appel d'urgence pour un motocycle (M) réalisé pour permettre la mise en œuvre d'un procédé conforme à l'une des revendications 1 à 4.

6. Programme d'ordinateur permettant l'envoi d'un appel d'urgence pour un motocycle (M) réalisé pour permettre la mise en œuvre d'un procédé conforme à l'une des revendications 1 à 4, lors de sa mise en œuvre sur un dispositif de traitement de données.

7. Produit, programme d'ordinateur comprenant un code de programme exécutable, ce code de programme étant réalisé pour permettre la mise en œuvre du procédé conforme à l'une des revendications 1 à 4, lorsqu'il est exécuté par un dispositif de traitement de données.
